## Europäisches Patentamt
## European Patent Office
## Office européen des brevets

(11) Veröffentlichungsnummer: **0 376 220**
**A2**

(12) # EUROPÄISCHE PATENTANMELDUNG

(21) Anmeldenummer: 89123847.9

(22) Anmeldetag: 22.12.89

(51) Int. Cl.5: **B02C 19/14**

(30) Priorität: 29.12.88 DE 3844263

(43) Veröffentlichungstag der Anmeldung:
04.07.90 Patentblatt 90/27

(84) Benannte Vertragsstaaten:
AT BE CH DE ES FR GB GR IT LI LU NL SE

(71) Anmelder: **MÖSCHLE KESSEL- UND APPARATEBAU GMBH**
**Kinzigtalstrasse 1a**
**D-7601 Ortenberg(DE)**

(72) Erfinder: **Ehinger, Martin, Dr. Ing.**
**Saarlandstrasse 13**
**D-7500 Karlsruhe 21(DE)**
Erfinder: **Litterst, Werner**
**Im Schwarzwäldele 23**
**D-7600 Offenburg(DE)**

(74) Vertreter: **Liesegang, Roland, Dr.-Ing. et al**
**FORRESTER & BOEHMERT**
**Widenmayerstrasse 4**
**D-8000 München 22(DE)**

(54) **Entsorgungseinrichtung für Altglas.**

(57) Eine Entsorgungsvorrichtung für Altglas, wie Flaschen weist einen Altglasbehälter (36) auf, dessen Einwerföffnung (34) eine Glaszerkleinerungsvorrichtung (4) vorgeschaltet ist. Die Glaszerkleinerungsvorrichtung weist eine an ihrem Umfang mit Vorsprüngen (10) versehene angetriebene Welle (6) auf. Im Betrieb rotiert die Welle mit den Vorsprüngen. Darauf auftreffendes Altglas zerspringt in kleine Glasteile, welche in den Altglasbehälter (36) ausgeworfen werden. Fremdkörper wie Korken oder Schraubdeckel werden von einem Sieb (32) zurückgehalten und in einen Abfallbehälter (38) ausgeworfen.

Fig. 1

## Entsorgungsvorrichtung für Altglas

Es ist in jüngerer Zeit üblich geworden, daß Gemeinden an Sammelstellen Altglasbehälter aufstellen, um eine Wiederverwertung leerer Flaschen und dgl. zu ermöglichen.

Solche Altglasbehälter sind relativ schnell gefüllt, wobei die Volumenausnützung wegen des hinsichtlich des eigentlichen Glasvolumens viel größeren Leervolumens der alten Flaschen oder dgl. nicht optimal ist. Daher müssen die Altglasbehälter mit zu deren Aufnahme eingerichteten Spezialfahrzeugen häufig entleert werden, was hohe Transportkosten verursacht.

Der Erfindung liegt die Aufgabe zugrunde, eine Entsorgungsvorrichtung für Altglas zu schaffen, bei der das Innenvolumen eines Altglasbehälters erheblich besser ausgenutzt und dadurch die Abtransportfrequenz entscheidend vermindert werden können.

Zur Lösung dieser Aufgabe ist bei einer Entsorgungsvorrichtung für Altglas, wie Flaschen, mit einem Altglasbehälter vorgesehen, daß der Einwerföffnung des Altglasbehälters eine Glaszerkleinerungsvorrichtung vorgeschaltet ist.

Bei einer Entsorgungsvorrichtung nach der Erfindung läßt sich der Altglasbehälter aufgrund der vorherigen Glaszerkleinerung mit einem Vielfachen desjenigen Glasvolumens füllen, mit dem die Altglasbehälter bisher ausgefüllt waren. Entsprechend seltener muß der Altglasbehälter zur Wiederverwertung abtransportiert werden.

Gemäß einer bevorzugten Ausführung der Erfindung weist die Glaszerkleinerungsvorrichtung eine an ihrem Umfang mit Vorsprüngen versehene angetriebene Welle auf, die in einem ersten Umfangsbereich mit Altglas beschickbar ist und über einen zweiten Umfangsbereich mit der Einwerföffnung des Altglasbehälters kommuniziert.

Zweckmäßig ist die Welle in einem Gehäuse gelagert, welches einen zum ersten Umfangsbereich hin sich öffnenden, mit Abweisern versehenen Einwerfteil und eine dem zweiten Umfangsbereich gegenüberstehende Auswerföffnung für zerkleinertes Glas aufweisen. Die Vorsprünge können als hammerkopfartige Fliehgewichte ausgebildet sein, welche schwenkbar am Umfang der Welle gelagert sind, oder können auch als Kränze von mit der Walle starr verbundenen oder einstückigen radialen Stiften oder Zacken ausgebildet sein. Beim Aufprallen des in den Einwerfteil des Gehäuses eingeworfenen Altglases auf den mit der Welle rotierenden Vorsprüngen zerspringen diese aufgrund der Sprödigkeit des Glases, wobei jedoch Fremdkörper, wie Korken, Flaschenschraubdeckel oder dgl. unversehrt bleiben. Dies macht sich eine besonders vorteilhafte Ausgestaltung der Erfindung zu einer Trennung der Fremdkörper vom zerkleinerten Glas dadurch zu nutze, daß der Einwerföffnung des Altglasbehälters ein Sieb zum Trennen von Fremdkörpern, wie Korken, Flaschenschraubdeckeln o. dgl. vorgeschaltet ist, welches in einen Abfallbehälter geneigt angeordnet ist und eine die zerkleinerten Glasteile durchlassende, jedoch die Fremdkörper zurückhaltende Maschenweite aufweist.

Mit der Ausbildung der Glasabtrennvorrichtung als Sieb ist trotz regelloser Zuführung des Altglases eine zuverlässige Aussonderung sonstigen Abfalls (Korken, Schraubdeckel etc.) aus dem Altglas realisiert.

Die Abweiser sorgen dafür, daß ein Verspritzen von zerkleinertem Glas in die Umgebung vermieden ist.

Schließlich ist durch die leichte Trennbarkeit der Glaszerkleinerungsvorrichtung von den übrigen Teilen der Einrichtung erreicht, daß die Glaszerkleinerungsvorrichtung beim Abtransportieren der Altglas- und Abfallbehälter nicht mittransportiert zu werden braucht, so daß sie in schonender Weise stets stationär am Aufstellungsort verbleiben kann.

Die Erfindung ist im folgenden anhand schematischer Zeichnungen an Ausführungsbeispielen näher erläutert. Es zeigen:

Fig. 1 einen schematischen Schnitt durch eine Entsorgungsvorrichtung nach der Erfindung, wobei ein Altglasbehälter und ein Abfallbehälter nur teilweise dargestellt sind;

Fig. 2 einen Teilschnitt nach der Linie II-II in Fig. 1;

Fig. 3 eine Teilansicht einer Welle der in den Fig. 1 und 2 dargestellten Zerkleinerungsvorrichtung im Ruhezustand;

Fig. 4 eine andere Ausführung einer Welle der Glaszerkleinerungsvorrichtung;

Fig. 5 einen Schnitt durch eine Entsorgungsvorrichtung gemäß der Erfindung, bei welcher ein Altglasbehälter, ein Abfallbehälter und eine Glaszerkleinerungsvorrichtung lösbar miteinander verbunden sind.

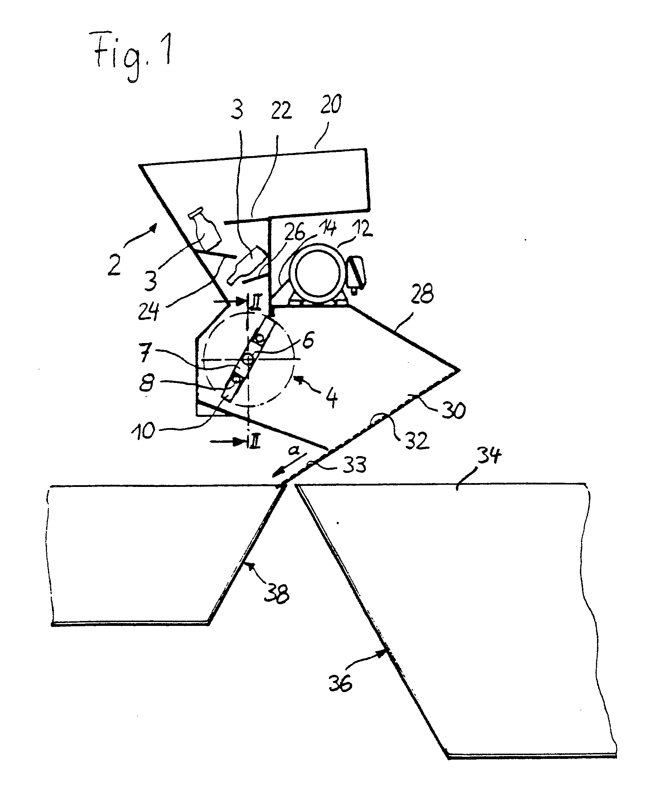

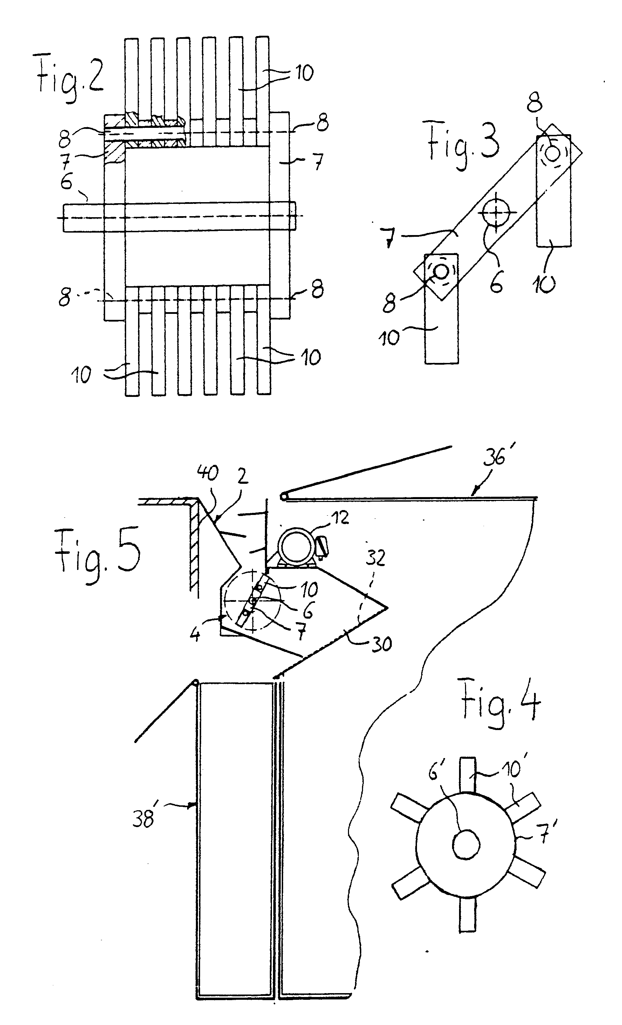

In den Fig. 1 und 2 ist mit der Bezugszahl 2 ein Gehäuse einer Glaszerkleinerungsvorrichtung 4 bezeichnet. Das Gehäuse hat einen Einwerfteil 20 mit einer trichterartigen Verengung zu einem zur Welle 6 parallelen Längsschlitz über dem oberen Umfangsbereich der Glaszerkleinerungsvorrichtung 4. In der trichterartigen Verengung sind Abweiser 22,24,26 vorgesehen, über welche die zu zerklernenden Altflaschen 3 in die Zerkleinerungsvorrichtung gelangen. Die Abweiser 22,24,26 verhindern ein Rückspritzen von zerkleinerten Glasteilchen aus dem Einwerfteil 20 hinaus zu der das Altgut einwer-

2

fenden Person hin.

Ein in Fig. 1 rechts dargestellter Umfangsbereich der Glaszerkleinerungsvorrichtung 4 öffnet sich in einen Auswerfteil 28 mit einer Auswerföffnung 30 für zerkleinertes Glas. Dieser Auswerföffnung 30 ist ein Sieb 32 mit einer die zerkleinerten Teilchen durchlassenden, jedoch Korken, Schraubdeckel oder dgl. rückhaltenden Maschenweite angeordnet.

Die Glaszerkleinerungsvorrichtung 4 selber weist eine Welle 6 auf, welche über nicht gezeigte Riemenscheiben und einen Treibriemen 14 von einem Elektromotor 12 angetrieben ist. Parallel zur Welle 6 sind Achsen 8 angeordnet, die mittels zweier radialer Streben 7 an der Welle 6 abgestützt sind. Auf den Achsen 8 sind über Distanzringe 16 beabstandete, hammerkopfartige Fliehgewichte 10 schwenkbar angelenkt. Bei drehender Welle 6 nehmen die Fliehgewichte 10 ihre radial nach außen gestreckte Stellung gemäß Fig. 1 ein, während sie bei stillstehender Welle 6 die Lage gemäß Fig. 3 einnehmen. Die Streben 7 können anstatt rein radial auch kreuz- oder sternförmig in Kränzen angeordnet sein.

Fig. 4 zeigt eine Ausführung, bei welcher anstatt der Streben 7 und Fliehgewichte 10 eine Trommel 7′ und daran starr angeordnete radiale Stifte 10′ in mehreren, axial hintereinander auf der Welle 6′ angeordneten Kränzen vorgesehen sind.

Es wurde gefunden, daß in schneller Folge in das oben offene Einwerfteil 20 eingeworfene Glasflaschen 3 in Teilchen größter Länge von 1 cm und weniger aufgrund des Aufpralls auf die rotierenden Vorsprünge 10 oder 10′ der Glaszerkleinerungsvorrichtung 4 wirksam zerkleinert werden. Korken, Flaschen, Schraubdeckel oder dgl. werden dagegen auf diese Weise nicht zerkleinert und kommen daher an der Auswerföffnung 30 vor dem Sieb 32 unversehrt an. Die Maschen des Siebes 32 halten solche Fremdkörper zurück und lassen sie aufgrund der geneigten Anordnung des Siebes und dessen unterer Verlängerung 33 unter dem Auswerfteil 28 in einen Abfallbehälter 38 (Pfeil a in Fig. 1) hineinrutschen. Zerkleinerte Glasteilchen fallen dagegen durch das Sieb 32 in die Einwerföffnung 34 des Altglasbehälters 36.

Fig. 5 zeigt eine integrierte Anordnung aus voneinander einzeln trennbaren Baugruppen, nämlich der Glaszerkleinerungsvorrichtung 4, dem Altglasbehälter 36′ und dem Abfallbehälter 38′.

Die Glasverkleinerungsvorrichtung 4 ist dabei lösbar mit einer fest installierten Wand 40 verbunden, während der Altglasbehälter 36′ und der Abfallbehälter 38′ so aufgestellt sind, daß ihre Öffnungen 34′ in Auffangposition für zerkleinertes Glas und Korken, Deckel u.s.w. bezüglich der Glaszerkleinerungsvorrichtung stehen. Die beiden Behälter 36′ und 38′ sind separat voneinander zur Entsorgung abtransportierbar.

## Ansprüche

1. Entsorgungsvorrichtung für Altglas, wie Flaschen, mit einem Altglasbehälter, dadurch **gekennzeichnet**, daß der Einwerföffnung (34,34′) des Altglasbehälters (36,36′) eine Glaszerkleinerungsvorrichtung (4) vorgeschaltet ist.

2. Entsorgungsvorrichtung nach Anspruch 1, dadurch **gekennzeichnet**, daß die Glaszerkleinerungsvorrichtung (4) eine an ihrem Umfang mit Vorsprüngen (10;10′) versehene, angetriebene Welle (6,6′) aufweist, die in einem ersten Umfangsbereich mit Altglas (3) beschickbar ist und über einen zweiten Umfangsbereich mit der Einwerföffnung (34,34′) des Altglasbehälters (36,36′) kommuniziert.

3. Zerkleinerungsvorrichtung nach Anspruch 1 oder 2, dadurch **gekennzeichnet**, daß die Welle (6,6′) in einem Gehäuse (2) gelagert ist, welches einen zum ersten Umfangsbereich der Welle (6,6′) sich öffnenden, mit Abweisern (22,24,26) versehenen Einwerfteil (20) und eine dem zweiten Umfangsbereich gegenüberstehende Auswerföffnung (30) für zerkleinertes Glas aufweist.

4. Zerkleinerungsvorrichtung nach Anspruch 3, dadurch **gekennzeichnet**, daß der Einwerföffnung (34,34′) des Altglasbehälters ein Sieb (32) zum Trennen von Fremdkörpern, wie Korken, Flaschenschraubdeckeln o. dgl. von dem zerkleinerten Glas vorgeschaltet ist und daß das Sieb eine die zerkleinerten Glasteile durchlassende, jedoch die Fremdkörper zurückhaltende Maschenweite aufweist.

5. Zerkleinerungsvorrichtung nach Anspruch 4, dadurch **gekennzeichnet**, daß das Sieb in einen Abfallbehälter (38,38′) unter einem solchen Winkel geneigt angeordnet ist, daß nicht durchgelassene Fremdkörper aufgrund ihrer Schwerkraft in den Abfallbehälter (38,38′) rutschen.

6. Zerkleinerungsvorrichtung nach einem der Ansprüche 1 bis 5, dadurch **gekennzeichnet**, daß das Gehäuse (2), der Altglasbehälter (36′) und der Abfallbehälter (38′) leicht trennbar voneinander als eine Einheit angeordnet sind.

7. Zerkleinerungsvorrichtung nach einem der Ansprüche 1 bis 6, dadurch **gekennzeichnet**, daß die Vorsprünge als hammerkopfartige Fliehgewichte (10) ausgebildet sind, die schwenkbar um Achsen (8) gelagert sind, welche über radiale Streben (7) an der Welle (6) unterstützt sind.

8. Zerkleinerungsvorrichtung nach einem der Ansprüche 1 bis 7, dadurch **gekennzeichnet**, daß die Vorsprünge als Kränze von mit der Welle (6′) starr verbundenen oder einstückigen radialen Stiften (10′) oder Zacken ausgebildet sind.

Fig. 1

EP 0 376 220 A2

Fig. 2

Fig. 3

Fig. 5

Fig. 4